# EUROPEAN PATENT APPLICATION

(11) **EP 4 745 794 A1**
(43) Date of publication of application: **20.05.2026**
(21) Application number: 24212679.5
(22) Date of filing: 13.11.2024
(51) Int. Cl.: G06F 16/242

(54) **CONTROLLING A HOUSEHOLD APPLIANCE BY A NATURAL LANGUAGE QUERY**

(71) Applicant: BSH Hausgeräte GmbH, 81739 München (DE)
(72) Inventor: Schliecker, Gudrun, 10967 Berlin (DE); Sagoo, Kiran Pal, 82256 Fürstenfeldbruck (DE)

(57) **Abstract**

The invention relates to a method for controlling a household appliance 1, the household appliance 1 comprising a data processing system 2 configured to operate the household appliance 1 according to a program composed of machine-related instructions, to operate to perform a task defined by a natural language query, comprising receiving the natural language query by the data processing system 2, parsing the natural language query by the data processing system 2 for extracting task-related data pertinent to operating the household appliance 1, and generating machine-related instructions applicable by the household appliance 1 for operating to perform the task by the data processing system 2, and operating the household appliance 1 to perform the task according to the machine-related instructions generated. The step of generating machine-related instructions includes entering the task-related data into a correlation device 3, 4 comprised in the data processing system 2 and trained with combinations of sampled task-related data and sampled program instructions corresponding to the sampled operation-related input data, and obtaining the program instructions from the correlation device 3, 4, and the step of generating machine-related instructions includes composing the program of the machine-related instructions and operating the household appliance 1 to perform the task according to the program. The invention also relates to a data processing system 2 comprising means for executing such method, and a permanent computer-readable medium comprising program instructions which, when read and loaded into a data processing system 2, cause the data processing system 2 to execute such method.

## Description

The invention relates to a method for controlling a household appliance, the household appliance comprising a data processing system configured to operate the household appliance according to a program composed of machine-related instructions, to operate to perform a task defined by a natural language query, comprising receiving the natural language query by the data processing system, parsing the natural language query by the data processing system for extracting task-related data pertinent to operating the household appliance, and generating machine-related instructions applicable by the household appliance for operating to perform the task by the data processing system, and operating the household appliance to perform the task according to the machine-related instructions generated. The invention also relates to a data processing system comprising means for executing such method, and a permanent computer-readable medium comprising program instructions which, when read and loaded into a data processing system, cause the data processing system to execute such method.

Use of natural language for controlling a household appliance to perform a task, wherein a natural language processor is applied for parsing a related natural language query is principally known such as described in EP3502865 A1. In such known context, the household appliance is understood to offer a multiplicity of predefined tasks for selection, and the natural language processor is principally applied to identify a predefined task to be selected by the natural language query of such predefined task and instruct the household appliance to execute this predefined task. In addition to identifying predefined tasks selected by respective natural language queries, the natural language processor may also be applied to process commands given in natural language queries and related to obtaining information about a task being executed such as time remaining, to suspending or resuming a task being executed, or to change a parameter applied in executing a task. To such ends, the natural language processor may communicate with the household appliance by a predefined protocol including a syntax. Machine learning concepts such as training a neuronal network with appropriate training data correlating sample natural language queries with tasks predefined for a given household appliance may be applied in configuring such natural language processor, enabling usefulness for a reasonably large multiplicity of users and a reasonably large variety of natural language queries formulated in various varieties and meaning one and the same task. The natural language processor may reside in the household appliance itself or in cloud support allocated to the household appliance, or it may reside in a mobile device such as a smartphone which has an app dedicated to household appliance control installed on it.

In the present context, a household appliance may be any appliance dedicated to or useful for performing tasks in a private household including a laundry care machine such as a washing machine, a laundry dryer and a washer-dryer, a dishwasher, a cooking hob, an oven, and a coffee machine.

The prior art concepts enable replacing mechanical control of a household appliance to perform a task using means like rotary switches and buttons by natural language control using natural language queries only. In such context, issues of operating the household appliance itself including the set of predefined programs offered for selection are withdrawn from consideration.

In the present context, a household appliance offers a set of predefined programs to the user for selection, whereby adaptation to user's individual interests and needs is limited and subject to manufacturer's reliance on user experience to select appropriate programs for tasks to be performed. This lack of customization may incur inefficient use of time and resources such as energy. Adding customer services such as collecting user's needs and user's feedback and providing updates for sets of predefined programs may be insufficient for fully catering to an individual user's needs and requirements. Accordingly, there is room for further improving household appliances to offer customization to users.

Considering laundry care as an example of a set of usual household tasks, there may be tasks that cannot be reliably resolved by a household appliance and require some manual pretreatment, or adaptation of operational parameters. A stain of red wine, a food composite such a tomato sauce or protein, or paint, may require a pretreatment by bleach, ox-gall soap or organic solvent before subjecting a piece of laundry having such stain to a usual laundry care program. Accordingly, there is room for further improving programs for performing tasks in household appliances to offer attention to problems which cannot be solved by operating a household appliance by a predefined program as commonly offered for selection.

The invention therefore is based on the problem to further improve methods for controlling a household appliance in attending to user's needs and requirements by providing performance of tasks aligned with user's requirements and needs. The invention is also based on the problem to further improve a data processing system comprising means for executing a method according to the invention, and to further improve a permanent computer-readable medium comprising program instructions which, when read and loaded into a data processing system, cause the data processing system to execute a method according to the invention.

In accordance with the invention, there are provided a method for controlling a household appliance to perform a task by a natural language query, a data processing system, and a computer-readable medium, as claimed in the respective independent claim.

Preferred embodiments of the invention are defined in dependent claims. Preferred embodiments of the method correspond to preferred embodiments of the data processing system and the computer-readable medium and vice versa absent any conflict based on technical consideration, even if such preferred embodiment is not specified in detail herein.

Specifically, there is provided, in accordance with the invention, a method for controlling a household appliance, the household appliance comprising a data processing system configured to operate the household appliance according to a program composed of machine-related instructions, to operate to perform a task defined by a natural language query, comprising receiving the natural language query by the data processing system, parsing the natural language query by the data processing system for extracting task-related data pertinent to operating the household appliance, and generating machine-related instructions applicable by the household appliance for operating to perform the task by the data processing system, and operating the household appliance to perform the task according to the machine-related instructions generated, a method wherein further the step of generating machine-related instructions includes entering the task-related data into a correlation device comprised in the data processing system and trained with combinations of sampled task-related data and sampled program instructions corresponding to the sampled operation-related input data, and obtaining the program instructions from the correlation device, and the step of generating machine-related instructions includes composing the program of the machine-related instructions and operating the household appliance to perform the task according to the program.

In addition, there is provided, in accordance with the invention, a data processing system comprising means for executing the method according to the invention, or any preferred embodiment thereof.

Further, there is provided, in accordance with the invention, a permanent computer-readable medium comprising program instructions which, when read and loaded into a data processing system, cause the data processing system to execute the method according to the invention, or any preferred embodiment thereof.

By applying the correlation device in obtaining the program instructions required for performing a task defined by a natural language query, the invention liberates the user from considering machine-related instructions and mapping the required task-related data to these, be they offered to the user for essentially free selection, as pre-defined programs with respective machine variables fixed or as pre-defined programs with options to vary certain machine variables. The invention only requires the use to state pertinent requirements in terms of task-related data such as specifying data related to task subjects to be treated by the task like structural data or data related to a prior application of task subjects, of course not excluding specification of machine-related data concurrently. An advantage of the invention is also flexibility and adaptability obtained by applying natural language for instructing the machine, thereby improving user comfort.

In addition, by applying the correlation device in obtaining the program instructions, the invention liberates the household appliance from being limited to operation by pre-defined programs provided by the manufacturer upon manufacturing or upon updating the household appliance. The correlation device provides a mapping of task-related data to machine-related instructions obtained by sampling, that is, by experience, and open to further elaboration by a self-learning process or by updating with newly sampled data obtained from performance of actual tasks. Thereby, the invention allows optimization of performance as well as customization to user's needs combined with evolution by adapting to user's needs as they may change in time.

Further, the invention provides for real-time adaptation to user's needs by generating treatment programs specifically adapted to user's needs, further enabling improvement of performance in operating according to user's tasks.

Specifically, combinations of sample task-related data and related sample program instructions may be compiled from pre-designed programs for operating a household appliance similar in its internal hardware composition to the subject household appliance, the pre-designed programs dedicated to performing specific tasks. Further, practice of users with similar household appliances may be assessed and evaluated to generate further combinations of sample task-related data and related sample program instructions applicable for training a subject household appliance. In accordance with preferred embodiments of the invention as described in detail further below, it is even possible to integrate concepts requiring user action prior to operating the household appliance in performing a specific task, such as pre-treating a stain in a piece of laundry with bleach or an organic solvent which does not lend itself to removal by a washing program as a common household appliance would offer, and following up with such washing program.

In accordance with a preferred embodiment of the invention, the data processing system may interact with an at least one external module which is provided separately from the household appliance wherein the said external module is configured to partly perform tasks of the data processing system. Such external module might be comprised by an external device such as the correlation device or a mobile device or a server wherein the household appliance and the external device comprise respective communication devices to exchange commands, instructions and/or information. In said preferred embodiment the external module may be configured to perform task according to the machine-related instructions generated wherein such tasks especially include the step of generating the machine-related instructions. An advantage of said embodiment is in providing more flexibility and additional computing power for the data processing system.

In accordance with a preferred embodiment of the invention, the machine-related instructions to be generated include instructions to operate by setting machine variables.

In accordance with another preferred embodiment of the invention, the machine variables include at least one of mechanical treatment, thermal treatment, chemical treatment, and duration of treatment. Thereby, the household machine may implement procedures composing a Sinner circle such as applied in the context of cleaning processes.

In accordance with a further preferred embodiment of the invention, the task comprises treatment of a task subject, and the task-related data comprise data characterizing the task subject. The task subject may be an item of food to be processed, an item to be subjected to a cleaning procedure such as a piece of laundry, a floor, and a dish. More preferred, the data characterizing the task subject comprise data characterizing the task subject permanently, and data characterizing the task subject and to be modified by the task. Data characterizing permanently may relate to the composition of the task subject such as the textile that a piece of laundry is made of or a material that a floor is composed of, and data to be modified may relate to a raw composition of food, stains and soil covering a floor, and stains and other types of dirt adhering to a piece of laundry after use.

In accordance with an exemplary embodiment of the invention, the household appliance is a laundry care machine, the task subject is laundry, and the task is treating the laundry in the laundry care machine. More preferred, the machine variables include mechanical treatment, thermal treatment, chemical treatment, and duration of treatment, the mechanical treatment includes soaking the laundry with suds and mechanically working the laundry, the chemical treatment includes adding a treatment agent to the suds prior to soaking and mechanically working the laundry, and the thermal treatment includes heating the suds to a predetermined temperature for treating the laundry.

In accordance with yet another preferred embodiment of the invention, the machine-related instructions to be generated include instructions to prompt a user for an extension of the natural language query. This will allow the data processing device to obtain further information for extending the task-related data, and thereby allow further improvement of the program for the household appliance to be composed and executed for performing the task.

In accordance with yet a further preferred embodiment of the invention, the prompt includes a natural language request to the user setting a condition to be fulfilled for operating the household appliance, and the extension of the natural language query includes a confirmation of the condition to be fulfilled. As an example, laundry to be treated as the task desired may have a colour-intense stain such as red wine, paint, ink, and blood, which may be difficult to treat with the means that are provided in a conventional household appliance, whereas they are well treatable by user's hand with chemicals such as non-water solvents, gall soap, and strong bleaching agents. According to the invention, the household appliance may inquire a user to perform such treatment by hand prior to operating the household appliance for best results, suspending operation until a suggested treatment by hand has been done and the thus treated task subject placed in the household appliance.

In accordance with still another preferred embodiment of the invention, the correlation device includes a regression network implementing a regression procedure for obtaining the program from the operation-related input data.

In accordance with still a further preferred embodiment of the invention, the correlation device includes a neuronal network.

In accordance with again a preferred embodiment of the invention, the data processing system is embodied as a control unit in the household appliance.

Preferred embodiments of the invention are described with reference to the attached drawing as follows.

In the drawing,
- Fig. 1: exhibits a schematic front view of a household appliance embodied as a washing machine and configured for applying an embodiment;
- Fig. 2: exhibits a schematic side view of the household appliance of Fig. 1;
- Fig. 3: exhibits a schematic sketch of user interaction with a household appliance in accordance with an embodiment; and
- Fig. 4: exhibits an enhanced flow diagram of a method according to an embodiment.

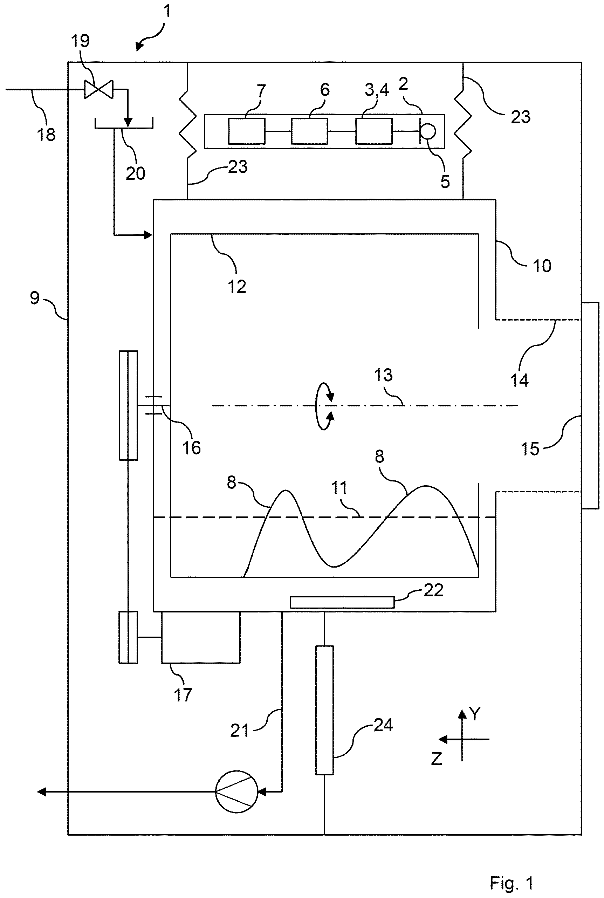

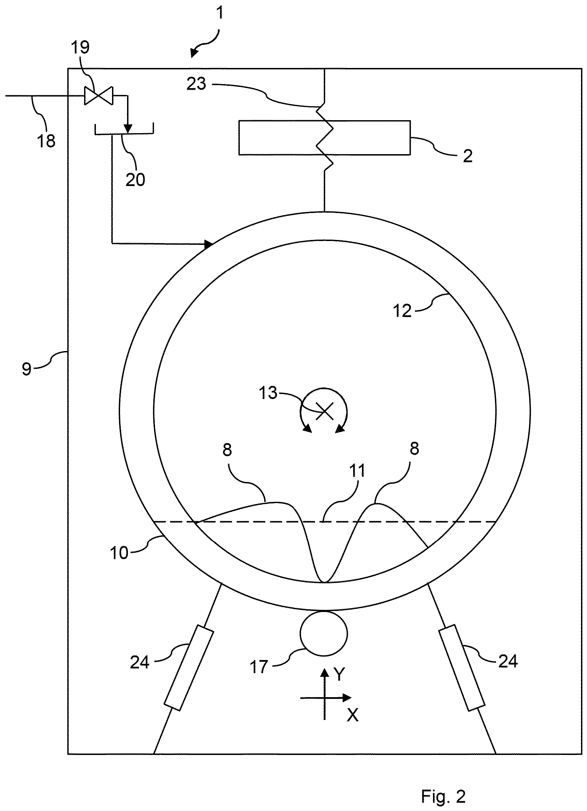

Figs. 1 and 2 exhibit a schematic front view of a household appliance 1 embodied as a washing machine 1 and configured to be controlled in operating according to a method for controlling the household appliance 1 comprising a data processing system 2 embodied as a control unit 2 and configured to operate the household appliance 1 according to a program composed of machine-related instructions, to operate to perform a task defined by a natural language query. The method comprises receiving the natural language query by the data processing system 2, parsing the natural language query by the data processing system 2 for extracting task-related data pertinent to operating the household appliance 1 and generating machine-related instructions applicable by the household appliance 1 for operating to perform the task by the data processing system 2, and operating the household appliance 1 to perform the task according to the machine-related instructions generated.

Specifically, the step of generating machine-related instructions includes entering the task-related data into a correlation device 3, 4 comprised in the data processing system 2 and trained with combinations of sampled task-related data and sampled program instructions corresponding to the sampled operation-related input data, and obtaining the program instructions from the correlation device 3, 4, and the step of generating machine-related instructions includes composing the program of the machine-related instructions and operating the household appliance 1 to perform the task according to the program.

Control unit 2 includes, besides correlation device 3, 4, a natural language input unit 5, a program generator 6, and a machine operation unit 7, whereof natural language input unit 5 receives the natural language query to parse it for extracting task-related data, which is forwarded to correlation device 3, 4. The latter generates machine-related instructions from the task-related data, and forwards these to program generator 6 which compiles them into a program to be forwarded to machine operation unit 7 for operating household appliance 1 accordingly.

The machine-related instructions to be generated include instructions to operate by setting machine variables, and the machine variables include at least one of mechanical treatment, thermal treatment, chemical treatment, and duration of treatment. Further, the task comprises treatment of a task subject 8, and the task-related data comprise data characterizing the task subject 8. Data characterizing the task subject 8 comprise data characterizing the task subject 8 permanently, and data characterizing the task subject 8 and to be modified by the task.

Presently, the household appliance 1 is a laundry care machine 1, the task subject 8 is laundry 8, and the task is treating the laundry 8 in the laundry care machine 1. Laundry care machine 1 has a rectangular housing 9 and disposed therein a tub 9 for holding suds 11 which are a principal means for treating laundry 8 by soaking. Suds 11 may be a washing suds 11 including, besides water, washing agents such as detergents, enzymes and softeners for cleaning laundry 8, or a rinsing suds 11 consisting essentially of water or water and fabric softener for extracting residuals of soil, detergent and enzymes from laundry 8. Laundry 8 is held in a drum 12 rotating in tub 10 around an axis of rotation 13. A gasket 14 of rubber-like material connects tub 10 to housing 9 at an opening to be closed by door 15, gasket allowing movements of tub 10 in reaction to laundry 8 being tumbled or spun by rotation of drum 12. A drive shaft 16 penetrates tub 10 and enables rotating drum 12 by means of motor 17 through a belt drive. Feed line 18 and feed valve 19 allow feeding of water to tub 10 under control of control unit 2, a mixing device 20 included in feed line 18 for adding agents for washing or rinsing to suds 11. A drain device 21 including a pump is also provided to discharge suds 11 from tub 10 under control of control unit 2. A heater 22 is provided for heating suds 11 under control of control unit 2. Spring legs 23 and absorber legs 24 are applied for suspending tub 10 within housing 9 to allow tub 10 to make swinging movements in reaction to laundry 8 being tumbled or spun by rotating drum 12, to exert mechanical work upon laundry 8 by tumbling at relatively low rotational speed or extract suds 11 from laundry 8 by spinning at relatively high rotational speeds.

The machine variables defining treatment of laundry 8 include mechanical treatment, thermal treatment, chemical treatment, and duration of treatment. The mechanical treatment includes soaking laundry 8 with suds 11 and mechanically working laundry 8, the chemical treatment includes adding a treatment agent to suds 11 prior to soaking and mechanically working laundry 8, and the thermal treatment includes heating suds 11 to a predetermined temperature for treating laundry 8.

As a specific advantage of the present embodiment, the machine-related instructions to be generated include instructions to prompt a user for an extension of the natural language query. Specifically, the prompt may include a natural language request to the user setting a condition to be fulfilled for operating household appliance 1, and the extension includes a confirmation of the condition to be fulfilled.

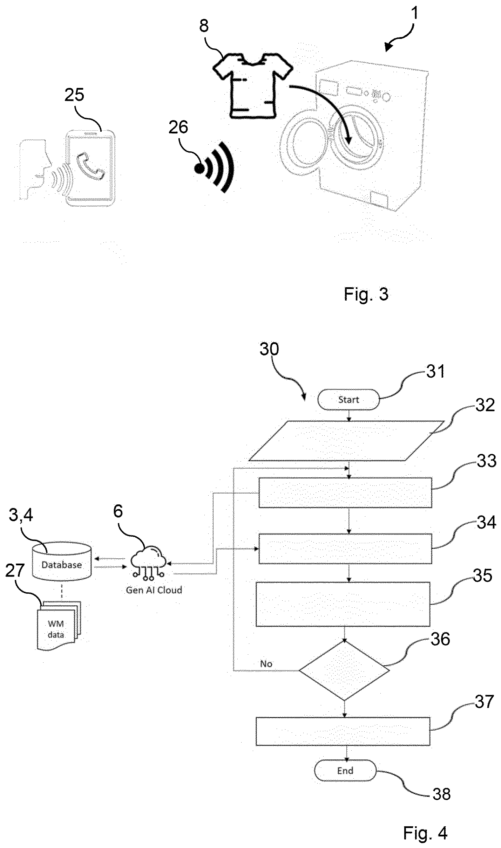

Fig. 3 exhibits an embodiment wherein a mobile device 25, particularly a smartphone 25, is applied in obtaining and providing a natural language query to household appliance 1. Specifically, smartphone 25 including an app dedicated to the purpose receives the natural language query as language spoken by the user and forwards the natural language query to household appliance 1 via a wireless local area network such as a WiFi-WLAN. In Fig. 3 is shown an Artificial Intelligence (Al) powered laundry care machine 1 as an example of a such household appliance 1. An example of such natural language query is the clause "I want to wash my warm sweater, it has some wine stains, I want it ready by tomorrow morning" as included in Fig. 3. From this query, natural language input unit 5 (see Fig. 1) infers that the textile to be treated is wool, that rather strong treatment is required for removing wine stains, and that the procedure for treatment may take time. Eventually, language input unit 5 may return questions to the user, for example towards confirming that the sweater's textile material is wool indeed, and for recommending a pre-treatment by manually treating the wine stains with bleach or ox-gall soap prior to placing in in washing machine 1.

For implementing correlation device 3, 4, various possibilities are provided.

In a first embodiment, correlation device 3, 4 includes a regression network 3 implementing a regression procedure for obtaining the program from the operation-related input data, the regression network to be understood to be based on a multidimensional matrix mapping the sample task-related data to machine-related instructions, wherein regression is performed by finding machine-related instructions which provide a best fit to similar sample task-related data and sample machine-related instructions.

In a second embodiment, correlation device 3, 4 includes a neuronal network 4 trained with sample task-related data and related sample machine-related instructions, wherein the trained neuronal network 4 receives actual task-related data as input and provides actual machine-related instructions related to the actual task-data as output for integrating into an operating program for household appliance 1.

Fig. 4 exhibits an enhanced flow diagram of a method according to an embodiment. A database 3, 4 which operates as correlation device 3, 4 is fed with data 27 comprising sample task-related data and sample machine-related instructions as above, and is connected to household appliance 1 via a program generator 6 which is actually included in a generative Artificial Intelligence cloud system resident in the Internet and accessible by household appliance 1 by a WiFi connection of via a smartphone 25 as in Fig. 3. Following user's natural language query as exemplified in Fig. 3, a process 30 is running to generate an operation program by program generator 6 to proceed as exhibited in Fig. 4's block diagram. The user places the cloth or laundry 8 into household appliance 1, as shown in Fig. 3 expressed by the arrow directed to the inside of laundry care machine 1, and gives a command by natural language query, which household appliance 1 or the mobile device 25 receives and sends it into the generative Artificial Intelligence cloud for analysis and program generation. After receiving such generated operation program, household appliance 1 or the mobile device 25 displays the generated operation program for user's approval, and either sends the generated operation program to machine operation unit 7 for execution under user's approval or returns to analysis of the natural language query for generating an alternative generated operation program with user's approval denied.

The steps of the process 30 for generation an operation program shown in Fig. 4 in case of a washing machine 1 are:
- Step 31, "Start" means starting the process 30 for generating an operation program, especially for composing a program of machine-related instructions. In particular, said process 30 is run on the mobile device 25. But it may be also part of the programs stored in the household appliance 1, here a washing machine 1, and the process 30 can also be run on the household appliance 1.
- Step 32 means that the user places the cloth 8 in the washing machine 1 and gives a command when all clothes are placed into the washing machine 1.
- Step 33 means that the user command given by natural language and an information of the type of household appliance 1 are sent by the system running the process 30 into the generative Artificial Intelligence cloud 6 for analysis.
- Step 34 means that the system running the process 30 receives the generated operation program with specific values, such as the specific machine related instructions of the generated operation program and its specific operation parameter.
- Step 35 means that the generated operation program is displayed to the user with detailed information of said program comprising its specific operation parameter.
- Step 36 means a request to the user whether or not a displayed program is accepted.
- Step 37 means the generated operation program is sent to the machine operation unit 7 of the household appliance in case that the user has accepted said program in step 36.
- Step 38 "End" finishes the process 30.

The method according to the invention or any of its preferred embodiments may reside in a permanent computer-readable medium comprising program instructions which, when read and loaded into a data processing system 2, cause the data processing system 2 to execute the method.

An advantage of the invention is flexibility and adaptability obtained by applying natural language for instructing the machine, thereby improving user comfort. The invention allows optimization of performance as well as customization to user's needs combined with evolution by adapting to user's needs as they may change in time. The invention provides for real-time adaptation to user's needs by generating treatment programs specifically adapted to user's needs, further enabling improvement of performance in operating according to user's tasks.

### REFERENCE NUMERALS

- 1: Household appliance; laundry care machine
- 2: Data processing system, control unit
- 3: Correlation device, regression network
- 4: Correlation device, neuronal network
- 5: Natural language input unit
- 6: Program generator
- 7: Machine operation unit
- 8: Task subject, laundry
- 9: Housing
- 10: Tub
- 11: Suds
- 12: Drum
- 13: Axis of rotation
- 14: Gasket
- 15: Door
- 16: Drive shaft
- 17: Motor
- 18: Feed line
- 19: Feed valve
- 20: Mixing device
- 21: Drain device
- 22: Heater
- 23: Spring leg
- 24: Absorber leg
- 25: Mobile device
- 26: Wireless local area network
- 27: sample data
- 30: process of generating an operation program
- 31: Step of the process 30
- 32 to 38: Further steps of process 30

## Claims

1. A method for controlling a household appliance (1), the household appliance (1) comprising a data processing system (2) configured to operate the household appliance (1) according to a program composed of machine-related instructions, to operate to perform a task defined by a natural language query, comprising receiving the natural language query by the data processing system (2), parsing the natural language query by the data processing system (2) for extracting task-related data pertinent to operating the household appliance (1), and generating machine-related instructions applicable by the household appliance (1) for operating to perform the task by the data processing system (2), and operating the household appliance (1) to perform the task according to the machine-related instructions generated, **characterized in that**
the step of generating machine-related instructions includes entering the task-related data into a correlation device (3, 4) comprised in the data processing system (2) and trained with combinations of sampled task-related data and sampled program instructions corresponding to the sampled operation-related input data, and obtaining the program instructions from the correlation device (3, 4); and
the step of generating machine-related instructions includes composing the program of the machine-related instructions and operating the household appliance (1) to perform the task according to the program.

2. The method according to claim 1, wherein the machine-related instructions to be generated include instructions to operate by setting machine variables.

3. The method according to claim 2, wherein the machine variables include at least one of mechanical treatment, thermal treatment, chemical treatment, and duration of treatment.

4. The method according to any preceding claim, wherein the task comprises treatment of a task subject (8), and the task-related data comprise data characterizing the task subject (8).

5. The method according to claim 4, wherein the data characterizing the task subject (8) comprise data characterizing the task subject (8) permanently, and data characterizing the task subject (8) and to be modified by the task.

6. The method according to claim 5, wherein the household appliance (1) is a laundry care machine (1), the task subject (8) is laundry (8), and the task is treating the laundry (8) in the laundry care machine (1).

7. The method according to claim 6, wherein the machine variables include mechanical treatment, thermal treatment, chemical treatment, and duration of treatment, the mechanical treatment includes soaking the laundry (8) with suds (11) and mechanically working the laundry (8), the chemical treatment includes adding a treatment agent to the suds (11) prior to soaking and mechanically working the laundry (8), and the thermal treatment includes heating the suds (11) to a predetermined temperature for treating the laundry (8).

8. The method according to any preceding claim, wherein the machine-related instructions to be generated include instructions to prompt a user for an extension of the natural language query.

9. The method according to claim 6, wherein the prompt includes a natural language request to the user setting a condition to be fulfilled for operating the household appliance (1), and the extension includes a confirmation of the condition to be fulfilled.

10. The method according to any preceding claim, wherein the correlation device (3, 4) includes a regression network (3) implementing a regression procedure for obtaining the program from the operation-related input data.

11. The method according to any preceding claim, wherein the correlation device (3, 4) includes a neuronal network (4).

12. A data processing system (2) comprising means for executing the method according to any preceding claim.

13. The data processing system (2) according to claim 12, which is embodied as a control unit (2) in a household appliance (1).

14. The data processing system (2) according to claim 13, wherein the household appliance (1) is a laundry care machine (1).

15. A permanent computer-readable medium comprising program instructions which, when read and loaded into a data processing system (2), cause the data processing system (2) to execute the method according to any of claims 1 to 11.
